# DEMANDE DE BREVET EUROPEEN

(11) **EP 1 715 436 A2**
(43) Date de publication de la demande: **25.10.2006**
(21) Numéro de dépôt: 06112843.5
(22) Date de dépôt: 20.04.2006
(51) Int. Cl.: G06F 21/00

(54) **Protection du déroulement d'un programme exécuté par un circuit intégré ou de données contenues dans ce circuit**

(30) Priorité: 21.04.2005 FR 0551011
(71) Demandeur: ST MICROELECTRONICS S.A., 92120 Montrouge (FR)
(72) Inventeur: Liardet, Pierre-Yvan, 13790 Peynier (FR); Teglia, Yannick, 13011, Marseille (FR); Pomet, Alain, 13790 Rousset (FR)
(74) Mandataire: de Beaumont, Michel

(57) **Abrégé**

L'invention concerne un procédé de protection d'un circuit intégré comportant au moins une mémoire non volatile (121), consistant à détecter une éventuelle perturbation (FAULT) dans le déroulement d'un programme (31) exécuté par le circuit intégré, modifier la valeur d'une variable numérique (FLAG) dans un élément de mémorisation volatile (122) en cas de détection de perturbation et, de façon temporellement indépendante de la détection, intervenir sur la mémoire non volatile en fonction de la valeur de ladite variable.

## Description

### Domaine de l'invention

La présente invention concerne de façon générale les circuits électroniques, et plus particulièrement, la protection du déroulement d'un programme exécuté par un circuit intégré ou de quantités numériques contenues dans un circuit intégré contre une extraction de ces données, suite à une perturbation du fonctionnement du circuit. L'invention concerne, par exemple, une protection contre une extraction de données suite à des injections de faute dans le fonctionnement du circuit et plus particulièrement dans un programme utilisant la ou les quantités numériques à protéger. Selon un autre exemple, l'invention concerne une protection contre une perturbation dans le déroulement d'un programme suite à une injection de faute.

La présente invention s'applique, par exemple, aux cartes à puce.

### Exposé de l'art antérieur

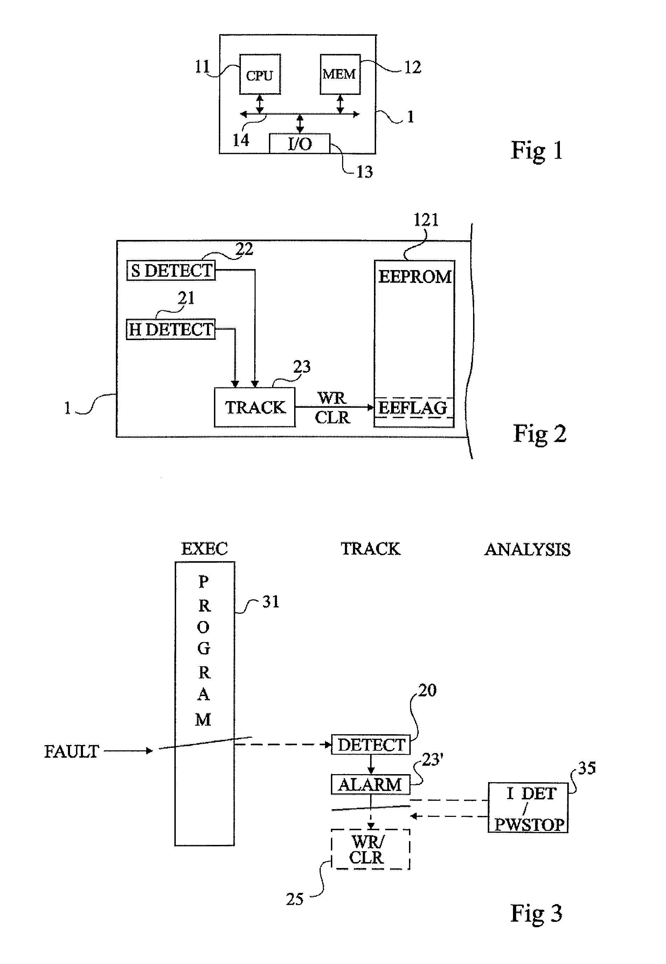

La figure 1 représente, de façon très schématique et sous forme de blocs, un exemple d'architecture simplifiée d'un circuit intégré 1, par exemple d'une carte à puce, du type auquel s'applique la présente invention. Le circuit 1 comporte une unité centrale de traitement 11 (CPU) associé à plusieurs mémoires 12 (MEM) parmi lesquelles au moins une mémoire vive de type RAM et une mémoire non volatile réinscriptible, par exemple de type EEPROM, et un circuit 13 d'entrée-sortie (I/O) permettant l'échange de données avec l'extérieur du circuit 1. Les différents éléments communiquent par un ou plusieurs bus internes 14 de données, d'adresses et de commandes.

Une catégorie d'attaques susceptibles d'être effectuées par des fraudeurs pour obtenir des données confidentielles de la puce 1 concerne les attaques dites par injection de fautes. Ces attaques consistent à perturber le fonctionnement du composant 1, par exemple, au moyen d'un rayonnement (laser, infrarouge, rayons-X, etc.) ou par d'autres moyens (par exemple en agissant sur l'alimentation du composant). Dans le cas d'un piratage de données, ces attaques sont généralement itératives pour découvrir successivement les différents bits d'une quantité secrète. Les injections de faute provoquent généralement un déroutement dans le déroulement d'un programme. Un tel déroutement peut également être recherché par un pirate, indépendamment d'une sortie de données pour, par exemple, sauter un mécanisme de protection, d'identification, etc.

Ces attaques peuvent être combinées à une analyse de la consommation (SPA - Simple Power Analysis) qui consiste à mesurer la consommation énergétique du circuit intégré pendant l'exécution d'algorithmes manipulant des clés ou quantités secrètes que le fraudeur cherche à découvrir, cette consommation étant différente selon les états respectifs des bits des quantités manipulés. Les attaques par analyse statistique de la consommation sont basées sur l'exploitation de résultats fournis par le circuit à partir d'hypothèses faites sur les différents bits de la quantité à découvrir.

Certains circuits intégrés comprennent des outils logiciels et/ou matériels pour détecter des perturbations dans leur fonctionnement en vérifiant qu'un programme s'est exécuté correctement. Par exemple, on exécute deux fois les mêmes instructions et on vérifie qu'elles conduisent au même résultat, ou on effectue un calcul de signature sur des données extraites de la mémoire. Selon un autre exemple, le circuit comporte des détecteurs de température de lumière, etc. pour détecter une éventuelle perturbation.

La figure 2 représente, de façon partielle et très schématique, un exemple classique de mécanisme d'un circuit intégré 1 pour protéger des données confidentielles qu'il contient. Le circuit 1 comporte un ou plusieurs détecteurs matériels 21 (H DETECT) de type capteur de tension, de température, de lumière, etc. et/ou un ou plusieurs détecteurs logiciels 22 (S DETECT) de type calcul de signature, calcul d'un code correcteur, etc. Les résultats du ou des détecteurs 21 et 22 sont interprétés par un circuit ou un programme de surveillance du fonctionnement du circuit (bloc 23, TRACK). En cas de perturbation détectée, le mécanisme 23 provoque soit l'écriture (WR) d'un mot de contrôle (EEFLAG) en mémoire non volatile 121 (EEPROM), soit l'effacement (CLR) de cette mémoire, au moins pour ce qui concerne la partie contenant des données ou algorithmes secrets du circuit 1.

La figure 3 illustre le fonctionnement du mécanisme de détection représenté en figure 2. Lors de l'exécution (EXEC) d'un programme 31 (PROGRAM) par l'unité centrale (11, figure 1) du circuit intégré, on suppose qu'un fraudeur perturbe le fonctionnement du circuit par une injection de faute (FAULT). Cette perturbation est détectée (bloc 20, DETECT) par le mécanisme de surveillance (TRACK) du fonctionnement du circuit. Cette détection conduit au traitement d'une alarme (bloc 23', ALARM) qui provoque l'écriture ou l'effacement (bloc 25, WR/CLR) dans la mémoire non volatile.

Un inconvénient de ce genre de mécanisme est que la signature en courant d'une programmation dans une mémoire non volatile de type EEPROM est très caractéristique et facile à détecter en surveillant la consommation du circuit intégré 1. Par conséquent, un fraudeur qui en parallèle effectue une analyse (ANALYSIS) de la consommation du circuit est capable de détecter, suite à son injection de faute, la réaction du circuit par une tentative d'écriture dans la mémoire non volatile. Le fraudeur peut alors provoquer un arrêt immédiat de l'alimentation du circuit (bloc 35, I DET/PW STOP) et empêcher ainsi l'exécution de la contre mesure (bloc 25). La coupure de l'alimentation peut prendre différentes formes (par exemple, brusque sortie de la carte d'un lecteur en cas de carte à puce à contacts ou suppression de la porteuse de téléalimentation en cas de carte sans contact).

A partir du moment où le fraudeur est capable de supprimer l'alimentation du circuit intégré pour empêcher l'écriture dans la mémoire non volatile ou son effacement, il peut effectuer une nouvelle itération de son attaque par injection de fautes et, par exemple, finir par obtenir la ou les quantités numériques censées rester secrètes.

### Résumé de l'invention

La présente invention vise à pallier tout ou partie des inconvénients des mécanismes connus de protection d'un circuit intégré suite à une détection d'injection de faute.

La présente invention vise plus particulièrement à éviter qu'un fraudeur puisse empêcher l'exécution d'un mécanisme d'écriture en mémoire non volatile suite à une détection de tentative de fraude.

L'invention vise également à proposer une solution compatible avec les éléments matériels des circuits intégrés classiques.

L'invention vise également à proposer une solution qui s'applique quelque soit l'objectif de l'injection de faute (sortie de données ou simple déroutement d'un programme).

Pour atteindre tout ou partie de ces objets, la présente invention prévoit un procédé de protection d'un circuit intégré comportant au moins une mémoire non volatile, consistant à :
détecter une éventuelle perturbation dans le déroulement d'un programme exécuté par le circuit intégré ;
modifier la valeur d'une variable numérique dans un élément de mémorisation volatile en cas de détection de perturbation ; et
de façon temporellement indépendante de la détection, intervenir sur la mémoire non volatile en fonction de la valeur de ladite variable.

Selon un mode de mise en oeuvre de la présente invention, l'intervention en mémoire non volatile consiste à recopier une information représentative de la valeur de la variable de l'élément de mémorisation volatile dans une zone de la mémoire non volatile.

Selon un mode de mise en oeuvre de la présente invention, le procédé sert à protéger le déroulement d'un programme exécuté par le circuit intégré.

Selon un mode de mise en oeuvre de la présente invention, le contenu de ladite information en mémoire non volatile est testé pour décider de l'effacement d'au moins une partie de cette mémoire non volatile.

Selon un mode de mise en oeuvre de la présente invention, le procédé sert à protéger une quantité numérique contenue dans ladite mémoire non volatile.

Selon un mode de mise en oeuvre de la présente invention, le contenu de ladite information en mémoire non volatile conditionne la sortie de données du circuit intégré.

Selon un mode de mise en oeuvre de la présente invention, l'intervention sur la mémoire non volatile est un effacement au moins partiel de cette mémoire.

Selon un mode de mise en oeuvre de la présente invention, l'intervention sur la mémoire non volatile est effectuée périodiquement.

Selon un mode de mise en oeuvre de la présente invention, ledit élément de stockage volatil est un registre d'une unité centrale de traitement du circuit intégré.

Selon un mode de mise en oeuvre de la présente invention, ledit élément de stockage volatil est une zone d'une mémoire volatile du circuit intégré.

La présente invention prévoit également un circuit intégré comportant au moins une unité centrale de traitement, une première mémoire non volatile et une deuxième mémoire volatile, au moins un détecteur d'une tentative de perturbation du fonctionnement du circuit, et un tel mécanisme de protection.

La présente invention prévoit également une carte à puce, comportant un tel circuit intégré.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente partiellement, de façon très schématique et sous forme de blocs, un exemple d'architecture d'un circuit intégré du type auquel s'applique la présente invention ;
la figure 2 représente, de façon très schématique et sous forme de blocs, un mécanisme classique de protection d'un circuit intégré suite à la détection d'une injection de faute ;
la figure 3 illustre le fonctionnement du mécanisme de la figure 2 ;
la figure 4 représente, de façon très schématique et sous forme de blocs, un mode de réalisation d'un mécanisme de protection d'un circuit intégré selon la présente invention ; et
la figure 5 illustre le fonctionnement du mécanisme de la figure 4.

Les mêmes éléments ont été désignés par les mêmes références aux différentes figures. Pour des raisons de clarté, seuls les éléments et étapes de procédé qui sont utiles à la compréhension de l'invention ont été représentés aux figures et seront décrits par la suite. En particulier, la constitution logicielle ou matérielle des détecteurs de perturbations dans un circuit intégré n'a pas été détaillée, la présente invention étant compatible avec tout détecteur classique. De même, les programmes exécutés par un circuit intégré du type auquel s'applique l'invention et les données manipulées n'ont pas été exposés, l'invention étant là encore compatible avec tout programme classique.

Une caractéristique d'un mode de mise en oeuvre de la présente invention est, en cas de détection d'une injection de faute (qu'elle soit volontaire ou accidentelle), de mettre à jour une variable dans un élément de stockage volatil du circuit intégré, puis de traiter cette information pour recopie dans une mémoire non volatile ou effacement d'au moins les données confidentielles qu'elle contient, de façon décorélée de la détection.

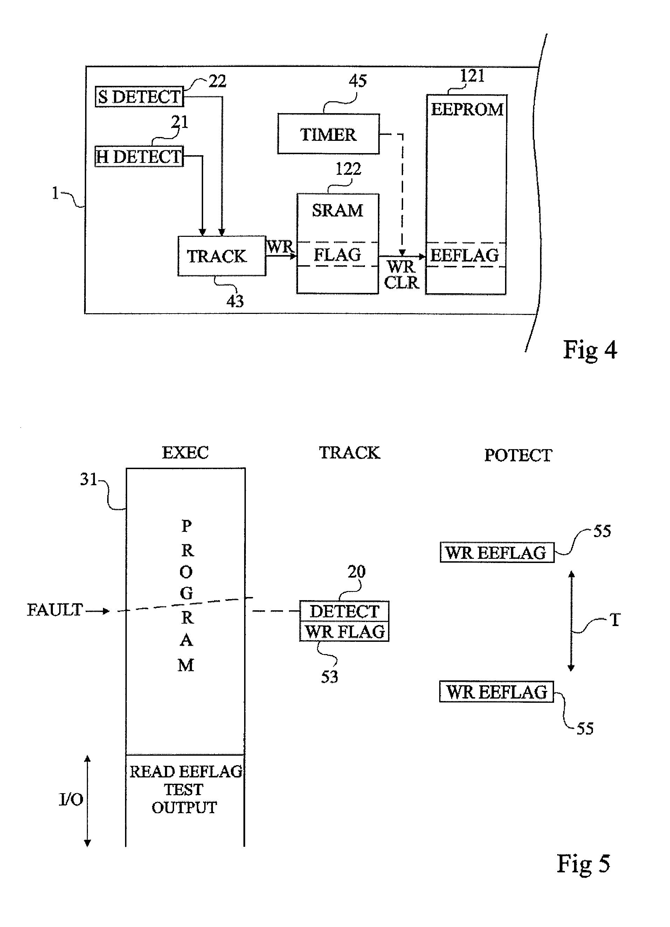

La figure 4 représente, partiellement, de façon très schématique et sous forme de blocs, un mode de réalisation d'un circuit intégré 1 pourvu d'un mécanisme de protection selon la présente invention.

Comme précédemment, le circuit 1 comporte un ou plusieurs détecteurs matériels 21 (H DETECT) d'éventuelles perturbations sur le fonctionnement du circuit intégré ou l'exécution d'un programme, et/ou un ou plusieurs détecteurs logiciels 22 (S DETECT). Les résultats de ces détecteurs sont exploités par un mécanisme matériel et/ou logiciel 43 (TRACK).

Selon ce mode de réalisation de l'invention, en cas de détection d'une faute provenant, par exemple, d'une tentative de fraude, le mécanisme 43 provoque l'écriture (WR) d'une variable (FLAG) dans une zone de mémoire volatile 122 (SRAM) du circuit intégré 1. L'enregistrement d'une telle variable n'est pas détectable sur la consommation du circuit dans la mesure où elle ne se différencie pas d'accès normaux et fréquents du programme dans cette mémoire non volatile. En variante, la variable FLAG est stockée dans un registre de l'unité centrale.

Le contenu de la variable FLAG en mémoire volatile est exploité de façon régulière, de préférence de façon périodique au moyen d'un compteur temporel (bloc 45, TIMER) de l'unité centrale, pour intervention sur une mémoire non volatile réinscriptible 121 (EEPROM).

Selon un premier mode de mise en oeuvre de l'invention, un mot EEFLAG est écrit (WR) dans une zone (adresse) de la mémoire non volatile 121. Par exemple, il s'agit d'une recopie du contenu de la variable FLAG de la mémoire 122.

Selon un autre mode de mise en oeuvre, si la variable FLAG de la mémoire volatile indique la détection d'une tentative de fraude, au moins la zone de la mémoire non volatile réinscriptible 121 contenant des données confidentielles est effacée (CLR).

La figure 5 illustre, de façon très schématique, un mode de fonctionnement du mécanisme décrit en relation avec la figure 4.

On suppose une exécution (EXEC) d'un programme 31 (PROGRAM) et l'injection d'une faute (FAULT) dans son déroulement.

Comme précédemment, cette faute est détectée (bloc 20, DETECT) par le mécanisme (TRACK) de surveillance du fonctionnement du circuit 1.

Suite à cette détection, le mécanisme de l'invention positionne la variable FLAG (bloc 53, WR FLAG) en mémoire volatile.

Parallèlement et de façon indépendante, le mécanisme de protection de l'invention (PROTECT) écrit périodiquement (blocs 55, WR EEFLAG) le contenu (plus généralement, une information représentative de ce contenu) de la variable FLAG de la mémoire volatile en mémoire non volatile. La périodicité (T) entre deux écritures en mémoire non volatile est fixée, de préférence, par un compteur de l'unité centrale (non représentée en figure 5).

Dans l'exemple illustré par la figure 5, la gestion des entrées-sorties (I/O) de données du circuit intégré dépend d'une lecture (READ EEFLAG) de la zone contenant l'information EEFLAG en mémoire non volatile, suivi d'un test (TEST) de la valeur de cette information avant de décider de la sortie (OUTPUT) de données vers l'extérieur du circuit. De préférence, la période T entre deux écritures de l'information EEFLAG est alors choisie pour être inférieure à la durée d'exécution du programme entre une zone sensible susceptible de subir une injection de faute et l'appel à la procédure d'entrée-sortie, de façon à pouvoir éviter la sortie de données.

Selon un autre mode de mise en oeuvre, la lecture du mot EEFLAG dans la mémoire non volatile s'effectue avant toute opération considérée comme sensible du point de vue de la sécurité de l'exécution d'un programme ou de données confidentielles contenues dans le circuit intégré et, de préférence, après chaque démarrage d'une nouvelle session de programme. Si la valeur correspond à une attaque identifiée, l'unité centrale provoque, par exemple, l'effacement des données sensibles dans la mémoire non volatile, ou empêche le démarrage du programme.

De préférence, le contenu de la variable FLAG est choisi pour avoir une signature en courant équilibrée entre les états indicateurs d'une détection de faute et indicateur d'un fonctionnement normal (poids de Hamming identique des deux valeurs).

De préférence, afin de préserver la durée de vie de la mémoire non volatile de type EEPROM, l'adresse du mot indicateur EEFLAG n'est pas toujours la même.

Un avantage de la présente invention est qu'elle rend indétectable à un fraudeur éventuel le fait qu'une attaque par injection de faute ait été détectée par le circuit.

Un autre avantage de l'invention est qu'elle préserve le traitement non volatile de cette détection de fraude.

Un autre avantage de la présente invention est qu'elle est compatible avec les différents modes d'exploitation des détections des tentatives de fraude qu'il s'agisse d'une interdiction de sortie de données d'une carte à puce ou d'un effacement d'une zone mémoire de celle-ci.

Un autre avantage de la présente invention est qu'elle ne modifie pas la détection d'une tentative de fraude en elle-même et est compatible avec les détecteurs de perturbation classiques.

Bien entendu, la présente invention est susceptible de diverses variantes et modifications qui apparaîtront à l'homme de l'art. En particulier, la mise en oeuvre pratique de l'invention par des moyens logiciels et/ou matériels est à la portée de l'homme de métier à partir des indications fonctionnelles données ci-dessus. De plus, bien que l'invention ait été décrite en relation avec une application préférée aux cartes à puce, elle s'applique plus généralement à la protection de n'importe quel circuit intégré.

## Revendications

1. Procédé de protection d'un circuit intégré comportant au moins une mémoire non volatile (121), **caractérisé en ce qu'**il consiste à :
détecter une éventuelle perturbation (FAULT) dans le déroulement d'un programme (31) exécuté par le circuit intégré ;
modifier la valeur d'une variable numérique (FLAG) dans un élément de mémorisation volatile (122) en cas de détection de perturbation ; et
de façon temporellement indépendante de la détection, intervenir sur la mémoire non volatile en fonction de la valeur de ladite variable.

2. Procédé selon la revendication 1, dans lequel l'intervention en mémoire non volatile consiste à recopier une information représentative de la valeur de la variable (FLAG) de l'élément de mémorisation volatile (122) dans une zone (EEFLAG) de la mémoire non volatile (121).

3. Procédé selon la revendication 1 ou 2, de protection du déroulement d'un programme exécuté par le circuit intégré.

4. Procédé selon la revendication 3, consistant à tester le contenu de ladite information (EEFLAG) en mémoire non volatile (121) pour décider de l'effacement d'au moins une partie de cette mémoire non volatile.

5. Procédé selon l'une quelconque des revendications 1 à 4, de protection d'une quantité numérique contenue dans ladite mémoire non volatile (121).

6. Procédé selon la revendication 5, dans lequel le contenu de ladite information (EEFLAG) en mémoire non volatile (121) conditionne la sortie (OUTPUT) de données du circuit intégré (1).

7. Procédé selon la revendication 1, dans lequel l'intervention sur la mémoire non volatile (121) est un effacement (CLR) au moins partiel de cette mémoire.

8. Procédé selon l'une quelconque des revendications 1 à 7, dans lequel l'intervention sur la mémoire non volatile (121) est effectuée périodiquement.

9. Procédé selon l'une quelconque des revendications 1 à 8, dans lequel ledit élément de mémorisation volatile (122) est un registre d'une unité centrale de traitement (11) du circuit intégré (1).

10. Procédé selon l'une quelconque des revendications 1 à 8, dans lequel ledit élément de mémorisation volatile est une zone d'une mémoire volatile (122) du circuit intégré (1).

11. Circuit intégré (1) comportant au moins une unité centrale de traitement (11), une première mémoire non volatile (121) et une deuxième mémoire volatile (122), au moins un détecteur (21, 22) d'une tentative de perturbation du fonctionnement du circuit, **caractérisé en ce qu'**il comporte un mécanisme de protection pour la mise en oeuvre du procédé selon l'une quelconque des revendications 1 à 10.

12. Carte à puce, **caractérisée en ce qu'**elle comporte un circuit intégré (1) selon la revendication 11.
